# FASCICULE DE BREVET EUROPEEN

(11) **EP 1 831 945 B1**
(45) Date de publication et mention de la délivrance du brevet: **30.04.2008**
(21) Numéro de dépôt: 05809230.5
(22) Date de dépôt: 18.10.2005
(51) Int. Cl.: H01M 4/48, H01M 10/40, C01G 31/02, C01D 15/02, C01B 31/00

(54) **MATERIAU NANOSTRUCTURE, PROCEDE POUR SA PREPARATION**
NANOSTRUKTURMATERIAL UND VERFAHREN ZU SEINER HERSTELLUNG
NANOSTRUCTURE MATERIAL, METHOD FOR THE PREPARATION THEREOF

(30) Priorité: 22.10.2004 FR 0411243
(43) Date de publication de la demande: 12.09.2007
(73) Titulaire: Batscap, 29500 Ergué-Gabéric (FR); Centre National de la Recherche Scientifique, 75016 Paris (FR)
(72) Inventeur: GAUBICHER, Joël, 44000 NANTES (FR); GUYOMARD, Dominique, 44880 SAUTRON (FR); DUBARRY, Matthieu, Honolulu, 96815, HI (US); DESCHAMPS, Marc, 29000 QUIMPER (FR); MOREAU, Philippe, 44850 SAINT MARS DU DESERT (FR)
(74) Mandataire: Sueur, Yvette
(86) Numéro de dépôt international: PCT/FR2005/002581
(87) Numéro de publication internationale: WO 2006/045923

(56) Documents cités:
- WO-A-20/06045921
- FR-A- 2 831 715
- US-A- 5 326 545
- US-A- 5 334 334
- PATENT ABSTRACTS OF JAPAN vol. 014, no. 085 (E-0890), 16 février 1990 (1990-02-16) & JP 01 296567 A (YUASA BATTERY CO LTD), 29 novembre 1989 (1989-11-29)
- PASSERINI S ET AL: "XAS and electrochemical characterization of lithium intercalated V2O5 xerogels" SOLID STATE IONICS, NORTH HOLLAND PUB. COMPANY. AMSTERDAM, NL, vol. 90, no. 1-4, septembre 1996 (1996-09), pages 5-14, XP004071642 ISSN: 0167-2738
- PISTOIA G ET AL: "LI/LI1+XV3O8 SECONDARY BATTERIES" JOURNAL OF THE ELECTROCHEMICAL SOCIETY, ELECTROCHEMICAL SOCIETY. MANCHESTER, NEW HAMPSHIRE, US, vol. 137, no. 8, 1 août 1990 (1990-08-01), pages 2365-2370, XP000231200 ISSN: 0013-4651 cité dans la demande

## Description

La présente invention concerne un procédé de préparation d'un matériau nanostructuré, le matériau obtenu, ainsi que son utilisation comme matière active d'une électrode positive.

Les batteries comprenant une électrode positive et une électrode négative séparée par un électrolyte comprenant un sel de lithium en solution dans un solvant sont largement connues. Le fonctionnement de ces batteries est assuré par la circulation réversible d'ions lithium dans l'électrolyte entre les électrodes. L'électrode positive est généralement constituée par un matériau composite comprenant une matière active, un liant, un matériau conférant une conduction électronique, et éventuellement un composé conférant une conduction ionique. Le composé conférant une conduction électronique peut être un noir de carbone qui ne catalyse pas l'oxydation de l'électrolyte à potentiel élevé.

Il est connu notamment par FR-2 831 715, d'utiliser un oxyde de lithium et de vanadium Li_{1+α}V₃O₈ (0,1 ≤ α ≤ 0,25) comme matière active d'électrode positive. I1 est également connu d'utiliser un composé β-LiₓV₂O₅ comme matière active d'électrode positive dans les batteries au lithium. Cependant, leur utilisation dans une électrode composite nécessite l'addition d'un matériau conférant une conduction électronique, par exemple du carbone.

Diverses tentatives ont été effectuées pour introduire du carbone dans une matière active d'électrode positive lors de la préparation de ladite matière active, afin d'améliorer les contacts entre la matière active et le carbone, et par conséquent la conductivité électronique de l'électrode composite.

Takashi Watanabe, et al. [Solid State Ionics, 151, 1-4, (2002)] décrivent la préparation d'un nanocomposite V₂O₅, nH₂O-carbone par un procédé comprenant les étapes de : préparation d'un sol de V₂O₅, nH₂O par réaction d'eau oxygénée sur du vanadium métallique ; addition d'eau et d'acétone au sol de V₂O₅, nH₂O pour le stabiliser ; addition de carbone ; séchage du mélange obtenu pour en faire une électrode. Le matériau obtenu est constitué de grains de carbone enrobés par V₂O₅, nH₂O. Cependant, les bonnes performances électrochimiques du matériau ne sont obtenues qu'avec un rapport massique C/matériau actif très élevé, de l'ordre de 1,4, ce qui est extrêmement défavorable à toute application industrielle.

Huan Huang, et al., [Angew. Chem. Int. Ed. 2001, 40, No. 20] décrivent la préparation d'un nanocomposite V₂O₅, nH₂O-Carbone par un procédé comprenant les étapes suivantes : préparation d'acide vanadique par passage d'une solution de métavanadate de sodium NaVO₃ à travers une colonne échangeuse d'ion H⁺/Na⁺ ; obtention du xerogel de V₂O₅, nH₂O par polycondensation de l'acide vanadique ; traitement acide du carbone pour fonctionnaliser la surface ; éventuellement greffage de polyéthylène glycol sur le carbone préalablement traité ; séchage du gel à température ambiante ; mise en solution du xerogel pour obtenir un sol avec l'aide d'ultrasons pour accélérer le processus ; mélange du carbone traité et du sol par agitation magnétique jusqu'à évaporation totale du solvant. Ce procédé nécessite environ deux jours et l'utilisation fastidieuse et onéreuse de résine échangeuse d'ions. Le matériau obtenu est constitué par des particules de carbone enrobées par V₂O₅, nH₂O. Lors de la préparation d'une électrode positive à partir du nanocomposite, du carbone supplémentaire est ajouté, à raison de 10% en masse.

EP-104918 décrit la préparation d'un nanocomposite LiFePO₄-Carbone graphitisé dans lequel un mince film graphitique enrobe la surface du matériau actif. Le nanocomposite peut être obtenu par un procédé en 3 étapes : synthèse de LiFePO₄ ; enrobage des grains de LiFePO₄ par un composé carboné précurseur du carbone graphitisé ; pyrolyse des grains enrobés à 700°C sous argon pour transformer le polymère en carbone graphitisé conducteur. Le nanocomposite peut également être obtenu en une seule étape, consistant à effectuer une pyrolyse sous argon d'un mélange des réactifs de LiFePO₄ et du composé carboné précurseur. Les résultats montrent une nette amélioration en termes de capacité et de puissance due uniquement à une plus grande efficacité du contact carbone-matériau actif. Dans tous les cas, 10% en masse de carbone supplémentaire est ajouté lors de la préparation d'une électrode composite.

Huang H, et al., [Electrochem Solid State Lett,4 (10) A170-172 (2001)], et [Adv. Mater. 2002, 14, No 21, November 4] décrivent respectivement la préparation de nanocomposites LiFePO₄-Carbone graphitisé et LiV₂(PO₄)₃-carbone graphitisé par un procédé en deux étapes. Les précurseurs du matériau actif sont mélangés à un gel de carbone qui est issu de la polymérisation de résorcinol-formaldéhyde. Un traitement thermique à 700°C sous azote pendant 5 h est nécessaire pour obtenir le nanocomposite. Leur procédé conduit à un enrobage des grains du matériau actif par du carbone. L'utilisation de résorcinol rend le procédé coûteux. En outre, lors de la préparation de l'électrode composite, il est nécessaire d'ajouter du carbone conducteur supplémentaire.

Le but de la présente invention est de fournir un procédé simple et peu onéreux pour la préparation d'un matériau associant intimement la matière active d'une électrode positive et du carbone donnant une conductivité électronique. La teneur en carbone du matériau est en quantité suffisante pour que ledit matériau puisse être utilisé comme matériau d'électrode sans addition supplémentaire d'un composé conférant une conduction électronique.

Le procédé selon la présente invention consiste à préparer un gel précurseur carboné et à soumettre ledit gel à un traitement thermique. Il est caractérisé en ce que :
- le gel précurseur est préparé par mise en contact de carbone, de V₂O₅-α et d'un précurseur de Li, en quantités telles que le rapport des concentrations [V₂O₅]/[Li] soit compris entre 1,15 et 1,5, et que le rapport en masse (carbone) / (carbone + V₂O₅ + précurseur de Li) soit de 10 à 15%;
- le traitement thermique est effectué en deux étapes : une première étape à une température entre 80°C et 150°C pendant une durée de 3 à 12 heures ; une seconde étape à une température entre 300°C et 350°C, pendant une durée comprise entre 10 min et 1 heure, sous atmosphère d'azote ou d'argon.

La première étape du traitement thermique peut être effectuée à l'air. Une durée de 6 heures à 90°C est généralement appropriée. Si la durée de la seconde étape du traitement thermique est inférieure à 10 min, il reste de l'eau résiduelle dans le composé final. Une durée supérieure à 1 heure entraîne une augmentation de la taille des cristallites qui conduit à une performance moins bonne en batterie.

La première étape du traitement thermique, qui donne un xérogel, peut être effectuée dans une étuve avant d'introduire le xérogel dans le four qui sera utilisé pour la seconde étape du traitement thermique. La première étape du traitement thermique peut aussi être effectuée dans le four utilisé pour la seconde étape, si celui-ci comprend au moins deux zones de traitement, l'une à la température de la première étape, l'autre à la température de la deuxième étape.

Dans un premier mode de réalisation, le précurseur de Li est LiOH, H₂O. V₂O₅-α et LiOH, H₂O sont introduits dans une suspension aqueuse de carbone sous atmosphère d'azote, et le gel se forme en environ 15 h. Les concentrations en précurseurs peuvent varier entre 0,75 mol/l et 3 mol/l pour V₂O₅-α et entre 0,55 mol/l et 2,2 mol/l pour LiOH, H₂O.

Dans un second mode de réalisation, on ajoute au milieu réactionnel une solution aqueuse contenant de 10 à 50% en volume de peroxyde d'hydrogène. Le gel se forme alors en quelques minutes. Les concentrations limites utilisables sont de 0,05 mol/l à 2 mol/l pour V₂O₅-α, et de 0,04 mol/l à 1,5 mol/l pour le précurseur de Li.

Dans le second mode de réalisation :
- le précurseur de lithium peut être choisi parmi LiOH,H₂O, LiCl, LiNO₃, ou un sel de lithium d'un acide carboxylique, choisi par exemple parmi l'acétylacétonate de lithium, l'acétate de lithium, le stéarate de lithium, le formiate de lithium, l'oxalate de lithium, le citrate de lithium, le lactate de lithium, le tartrate de lithium, le pyruvate de lithium ;
- on prépare une suspension aqueuse de V₂O₅-α et de carbone, et l'on y ajoute une solution aqueuse de peroxyde, le précurseur de lithium pouvant être introduit dans la suspension aqueuse de V₂O₅-α et de carbone avant l'addition de la solution de peroxyde, ou après l'addition de la solution de peroxyde c'est-à-dire au cours de la formation du gel. Le début de formation du gel s'observe dès 3 min après la mise en contact de V₂O₅-α et du peroxyde. Le gel est complètement formé après un mûrissement de 15 min.
- les quantités respectives de précurseur de Li et de V₂O₅-α dans le milieu réactionnel sont de préférence telles que 0,08 mol.l⁻¹ < [Li] < 0,7 mol.l⁻¹ ; 0,1 mol.l⁻¹ < [V₂O₅] < 1 mol.l⁻¹. Des concentrations trop élevées en réactifs peuvent provoquer une effervescence, alors que des concentrations trop faibles donnent des précipités, et non pas des gels.

Le matériau obtenu par le procédé de l'invention est un matériau carboné nanostructuré constitué par des agglomérats de petites aiguilles de Li_{1+α}V₃O₈ et de βLiₓV₂O₅ (0,1≤ α ≤ 0,25 et 0,03 ≤ x ≤0,667 entourées par une couche discontinue de particules sphériques de carbone, dans lequel
- les aiguilles de Li_{1+α}V₃O₈ et les aiguilles de βLiₓV₂O₅ ont une longueur L de 40 à 100 nm, une largeur ℓ telle que 4<L/ℓ<100 et une épaisseur e telle que 4<L/e<100,
- les particules de carbone sphérique ont un diamètre compris d'environ 30 nm à 40 nm et forment un réseau tridimensionnel continu,
- La taille des cristallites constituant les aiguilles est comprise entre 50 et 300 Å selon **a**, 100 et 600 Å selon **b** et 75 et 450 Å selon **c**.

Dans les matériaux ainsi définis, il existe une liaison intime à l'échelle nanoscopique entre les aiguilles de Li_{1+α}V₃O₈ et de βLiₓV₂O₅ et les particules sphériques de carbone.

La structure du matériau composite proposé peut être visualisée par différentes techniques. La Microscopie Electronique à Balayage (MEB) permet d'avoir une vue d'ensemble. La Microscopie Electronique en Transmission (MET) montre que le carbone enrobe les grains de matériaux actifs avec une bonne qualité de contact et la diffraction des rayons X montre que βLiₓV₂O₅ est présent.

Un matériau carboné nanostructuré selon la présente invention peut être utilisé pour l'élaboration d'une électrode composite positive pour une batterie au lithium.

Dans un mode de réalisation particulier, une électrode positive selon la présente invention est constituée par un matériau composite qui contient :
- un composé carboné nanostructuré obtenu par le procédé de la présente invention,
- un liant conférant une tenue mécanique,
- éventuellement un composé conférant une conduction ionique.

La teneur en composé carboné nanostructuré est comprise de préférence entre 90 et 100 % en masse. La teneur en liant est de préférence inférieure à 10 % en masse. La teneur en composé conférant une conduction ionique est de préférence inférieure à 5 % en masse. On préfère tout particulièrement les électrodes constituées uniquement par le composé carboné nanostructuré et un liant.

Le carbone du matériau carboné nanostructuré de l'invention a un triple rôle d'agent réducteur, de conducteur et d'agent nanostructurant. En effet, il permet la réduction chimique d'une partie de la phase Li_{1+α}V₃O₈ en βLiₓV₂O₅, Il améliore le contact à la surface des grains de matériau actif. Du fait de la présence des deux constituants Li_{1+α}V₃O₈ et βLiₓV₂O₅ qui sont intimement mélangés à une échelle nanoscopique et dont la croissance a lieu in situ au sein même des pores d'un réseau de grains de carbone, la taille des domaines de matériau actif est réduite et la surface de contact conducteur électronique / matériau actif est considérablement augmentée par rapport à un matériau obtenu par simple mélange de ces trois constituants qui utiliserait un composé Li_{1+α}V₃O₈ synthétisé dans des conditions de temps et de température identiques. En conséquence, l'efficacité de l'apport électronique depuis le collecteur de courant jusqu'au matériau actif est améliorée et le chemin de diffusion des ions lithium au sein des grains est réduit.

Le liant peut être constitué par un polymère non solvatant, par un polymère solvatant ou par un mélange de polymère solvatant et de polymère non solvatant. Il peut contenir en outre un ou plusieurs composés liquides polaires aprotiques. Le polymère non solvatant peut être choisi parmi les homopolymères et les copolymères de fluorure de vinylidène, les copolymères d'éthylène, de propylène et d'un diène, les homopolymères et les copolymères de tétrafluoroéthylène, les homopolymères et les copolymères de N-vinylpyrrolidone, les homopolymères et les copolymères d'acrylonitrile et les homopolymères et les copolymères de méthacrylonitrile. Le poly(fluorure de vinylidène) est particulièrement préféré. Le polymère non solvatant peut porter des fonctions ioniques. A titre d'exemple d'un tel polymère, on peut citer les sels de polyperfluoroéther sulfonate, dont certains sont commercialisés sous la dénomination Nafion®, et les sels de polystyrène sulfonate.

Le polymère solvatant peut être choisi par exemple parmi les polyéthers de structure linéaire, peigne ou à blocs, formant ou non un réseau, à base de poly(oxyde d'éthylène) ; les copolymères contenant le motif oxyde d'éthylène ou oxyde de propylène ou allylglycidyléther ; les polyphosphazènes ; les réseaux réticulés à base de polyéthylène glycol réticulé par des isocyanates ; les copolymères d'oxyde d'éthylène et d'épichlorhydrine ; et les réseaux obtenus par polycondensation et portant des groupements qui permettent l'incorporation de groupements réticulables.

Le composé polaire aprotique peut être choisi parmi les carbonates linéaires ou cycliques, les éthers linéaires ou cycliques, les esters linéaires ou cycliques, les sulfones linéaires ou cycliques, les sulfamides et les nitriles.

Le composé conférant une conduction ionique est un sel de lithium, choisi avantageusement parmi LiClO₄, LiPF₆, LiAsF₆, LiBF₄, LiR_{F}SO₃, LiCH₃SO₃, les bisperfluoroalkyl sulfonimidures de lithium, les bis- ou les trisperfluorosulfonylméthides de lithium.

Une électrode positive composite selon l'invention peut être élaborée en mélangeant le matériau carboné nanostructuré, un liant dans un solvant approprié, et éventuellement un sel de lithium, en épandant le mélange obtenu sur un disque métallique servant de collecteur (par exemple un disque d'aluminium), puis en évaporant le solvant à chaud sous atmosphère d'azote. Le solvant est choisi en fonction du liant utilisé. Une électrode positive peut en outre être élaborée par extrusion d'un mélange de ses constituants.

Une électrode ainsi constituée peut être utilisée dans une batterie comprenant une électrode positive et une électrode négative séparée par un électrolyte comprenant un sel de lithium en solution dans un solvant. Le fonctionnement d'une telle batterie est assuré par la circulation réversible d'ions lithium dans l'électrolyte entre les électrodes. L'un des objets de la présente invention est une batterie dans laquelle l'électrolyte comprend un sel de lithium en solution dans un solvant, caractérisée en ce qu'elle comprend une électrode positive contenant comme matière active le matériau carboné nanostructuré préparé selon le procédé de la présente invention. Lorsqu'une électrode positive contenant le matériau carboné nanostructuré tel qu'obtenu par le procédé de l'invention est monté dans une batterie, la batterie ainsi constituée se trouve à l'état chargé.

Dans une batterie selon l'invention, l'électrolyte comprend au moins un sel de lithium en solution dans un solvant. Comme exemple de sel, on peut citer LiClO₄, LiAsF₆, LiPF₆, LiBF₄, LiR_{F}SO₃, LiCH₃SO₃, LiN(R_{F}SO₂)₂, LiC(R_{F}SO₂)₃ et LiCF(R_{F}SO₂)₂, R_{F} représentant un groupe perfluoroalkyle ayant de 1 à 8 atomes de carbone ou un atome de fluor.

Le solvant de l'électrolyte peut être constitué par un ou plusieurs composés polaires aprotiques choisis parmi les carbonates linéaires ou cycliques, les éthers linéaires ou cycliques, les esters linéaires ou cycliques, les sulfones linéaires ou cycliques, les sulfamides et les nitriles. Le solvant est constitué de préférence par au moins deux carbonates choisis parmi le carbonate d'éthylène, le carbonate de propylène, le carbonate de diméthyle, le carbonate de diéthyle et le carbonate de méthyle et d'éthyle. Une batterie ayant un électrolyte à solvant polaire aprotique fonctionne généralement dans un domaine de température de -20°C à 60°C.

Le solvant de l'électrolyte peut en outre être un polymère solvatant. Comme exemples de polymères solvatants, on peut citer les polyéthers de structure linéaire, peigne ou à blocs, formant ou non un réseau, à base de poly(oxyde d'éthylène) ; les copolymères contenant le motif oxyde d'éthylène ou oxyde de propylène ou allylglycidyléther ; les polyphosphazènes ; les réseaux réticulés à base de polyéthylène glycol réticulé par des isocyanates ; les copolymères d'oxyéthylène et d'épichlorhydrine tels que décrits dans FR-2 770 034 ; et les réseaux obtenus par polycondensation et portant des groupements qui permettent l'incorporation de groupements réticulables. On peut également citer les copolymères à blocs dans lesquels certains blocs portent des fonctions qui ont des propriétés rédox. Une batterie ayant un électrolyte à solvant polymère fonctionne généralement dans un domaine de température de 60°C à 120°C.

Le solvant de l'électrolyte peut en outre être un mélange d'un composé liquide aprotique polaire choisi parmi les composés polaires aprotiques cités ci-dessus et d'un polymère solvatant. Il peut comprendre de 2 à 98% en volume de solvant liquide, suivant que l'on souhaite un électrolyte plastifié avec une faible teneur en composé aprotique polaire, ou un électrolyte gélifié avec une teneur élevée en composé aprotique polaire. Lorsque le solvant polymère de l'électrolyte porte des fonctions ioniques, le sel de lithium est facultatif.

Le solvant de l'électrolyte peut aussi être un mélange d'un composé polaire aprotique tel que défini ci-dessus ou d'un polymère solvatant tel que défini ci-dessus, et d'un polymère polaire non solvatant comprenant des unités contenant au moins un hétéroatome choisi parmi le soufre, l'oxygène, l'azote et le fluor. Un tel polymère non solvatant peut être choisi parmi les homopolymères et les copolymères d'acrylonitrile, les homopolymères et les copolymères de fluorovinylidène, et les homopolymères et les copolymères de N-vinylpyrrolidone. Le polymère non solvatant peut en outre être un polymère portant des substituants ioniques, et notamment un sel de polyperfluoroéther sulfonate (tel qu'un Nafion® précité par exemple) ou un sel de polystyrène sulfonate.

Dans un autre mode de réalisation, l'électrolyte de la batterie de la présente invention peut être un solide conducteur inorganique, choisi parmi les composés désignés habituellement par Lisicon, c'est-à-dire des solutions solides Li₄XO₄-Li₃YO₄ (X = Si ou Ge ou Ti ; Y = P ou As ou V), Li₄XO₄-Li₂AO₄ (X = Si ou Ge ou Ti ; A = Mo ou S), Li₄XO₄-LiZO₂ (X = Si ou Ge ou Ti ; Z = Al ou Ga ou Cr), Li₄XO₄-Li₂BXO₄ (X = Si ou Ge ou Ti ; B = Ca ou Zn), LiO₂-GeO₂-P₂O₅, LiO₂-SiO₂-P₂O₅, LiO₂-B₂O₃-Li₂SO₄, LiF-Li₂S-P₂S₅, Li₂O-GeO₂-V₂O₅ ou LiO₂-P₂O₅-PON. Une batterie au lithium comprenant un tel électrolyte fonctionne dans un très large domaine de température, de l'ordre de -20°C à 100°C.

Bien entendu, l'électrolyte d'une batterie de la présente invention peut contenir en outre les additifs utilisés de manière classique dans ce type de matériau, et notamment un plastifiant, une charge, d'autres sels, etc.

L'électrode négative de la batterie peut être constituée par du lithium métallique ou un alliage de lithium qui peut être choisi parmi les alliages β-LiAl, γ-LiAl, Li-Pb (par exemple Li₇Pb₂), Li-Cd-Pb, Li-Sn, Li-Sn-Cd, Li-Sn dans différentes matrices, notamment des matrices oxygénées ou des matrices métalliques (par exemple Cu, Ni, Fe, Fe-C), Li-Al-Mn.

L'électrode négative de la batterie peut en outre être constituée par un matériau composite comprenant un liant et un matériau capable d'insérer de manière réversible des ions lithium à bas potentiel rédox (désigné ci-après par matériau d'insertion), ledit matériau composite étant lithié au cours d'une étape préliminaire. Le matériau d'insertion peut être choisi parmi les matériaux carbonés, naturels ou de synthèse. Ces matériaux carbonés peuvent être par exemple un coke de pétrole, un graphite, un whisker de graphite, une fibre de carbone, un méso carbone micro grains, (désigné usuellement par meso carbon micro bead), un coke de brai (désigné usuellement par pitch coke), un coke aiguille (désigné usuellement par needle coke). Le matériau d'insertion peut en outre être choisi parmi les oxydes tels que par exemple LiₓMoO₂, LiₓWO₂, LiₓFe₂O₃, Li₄Ti₅O₁₂, LiₓTiO₂ ou parmi les sulfures tels que par exemple Li₉Mo₆S₆ et LiTiS₂ ou parmi les oxysulfures. On peut également utiliser des composés permettant de stocker réversiblement le lithium à bas potentiel, tels que des vanadates amorphes (par exemple LiₓNiVO₄), les nitrures (par exemple Li_{2,6-x}Co_{0,4}N, Li₂₊ₓFeN₂, Li₇₊ₓMnN₄), les phosphures (par exemple Li₉₋ₓVP₄), les arséniures (par exemple Li₉₋ₓVAs₄) et les oxydes à décomposition réversible (par exemple CoO, CuO, Cu₂O). Le liant est un liant organique stable électrochimiquement dans le domaine de fonctionnement de l'électrode négative. A titre d'exemple, on peut citer les homopolymères du fluorure de polyvinylidène ou un copolymère éthylène propylène diène. Un poly(fluorure de polyvinylidène) est particulièrement préféré. Une électrode composite négative peut être élaborée en introduisant le composé carboné dans une solution du liant dans un solvant polaire aprotique, en épandant le mélange obtenu sur un disque de cuivre servant de collecteur, puis en évaporant le solvant à chaud sous atmosphère d'azote.

Une batterie selon l'invention comprenant un électrolyte solide peut se présenter sous la forme d'une succession de couches constituées respectivement par le matériau de l'électrode positive selon l'invention et son collecteur de courant, l'électrolyte solide, et l'électrode négative et éventuellement son collecteur de courant.

Une batterie selon l'invention comprenant un électrolyte liquide peut également se présenter sous forme d'une succession de couches constituées respectivement par le matériau de l'électrode positive selon l'invention et son collecteur de courant, un séparateur imbibé par l'électrolyte liquide, et le matériau constituant l'électrode négative et éventuellement son collecteur de courant.

La présente invention est illustrée plus en détail par les exemples donnés ci-après auxquels elle n'est cependant pas limitée.

### Exemple 1

### Préparation sans peroxyde

On a préparé une suspension aqueuse de précurseurs en ajoutant 6, 8200 g (1,5 M) de V₂O₅-α, et 1,2589 g (1,2 M) de LiOH,H₂O à 25 ml d'une suspension aqueuse contenant 5,18 g de carbone à 50°C sous atmosphère d'azote. Un gel, désigné ci-après par GC, s'est formé après une période de mûrissement de 15 heures. Ensuite, on a séché le gel GC pendant une nuit à l'air à 90°C, puis on a soumis le xérogel ainsi obtenu à un traitement à 350°C pendant 15 min sous argon. Le produit obtenu est désigné ci-après par XC-15a.

On a préparé à titre comparatif un composé, désigné ci-après par SC350, selon un procédé proche de l'art antérieur (G.Pistoia, et al., J. Electrochem. Soc., 137, 2365 (1990)). Le procédé de préparation diffère du procédé de préparation de l'échantillon XC-15a, d'une part parce l'addition de carbone a été omise lors de la préparation de gel, et d'autre part parce que le xérogel obtenu après l'étape de séchage a été soumis à un traitement thermique à 350°C pendant 10 heures, avec un rampe de montée en température de 80°C/h.

La figure 1 représente des micrographies du matériau XC-15a selon l'invention (micrographies a et b), et du matériau SG350 selon l'art antérieur (micrographie c).

La micrographie MEB (a) représente une vue d'ensemble du matériau XC-15a. La micrographie MET (b) montre que les grains de carbone enrobent les grains de Li_{1+α}V₃O₈ et de βLiₓV₂O₅ avec une bonne qualité de contact.

La micrographie MET (c) correspond à l'échantillon SG350.

La figure 2 représente à gauche des diagrammes de diffraction des rayons X, et à droite un diagramme montrant l'évolution des tailles de cristallites dans les trois directions cristallographiques a, b et c, pour l'échantillon XC-15a selon l'invention et pour l'échantillon SG350 selon l'art antérieur. La présence de βLiₓV₂O₅ dans l'échantillon XC-15a est mise en évidence par les pics associés à cette phase, signalés par *.

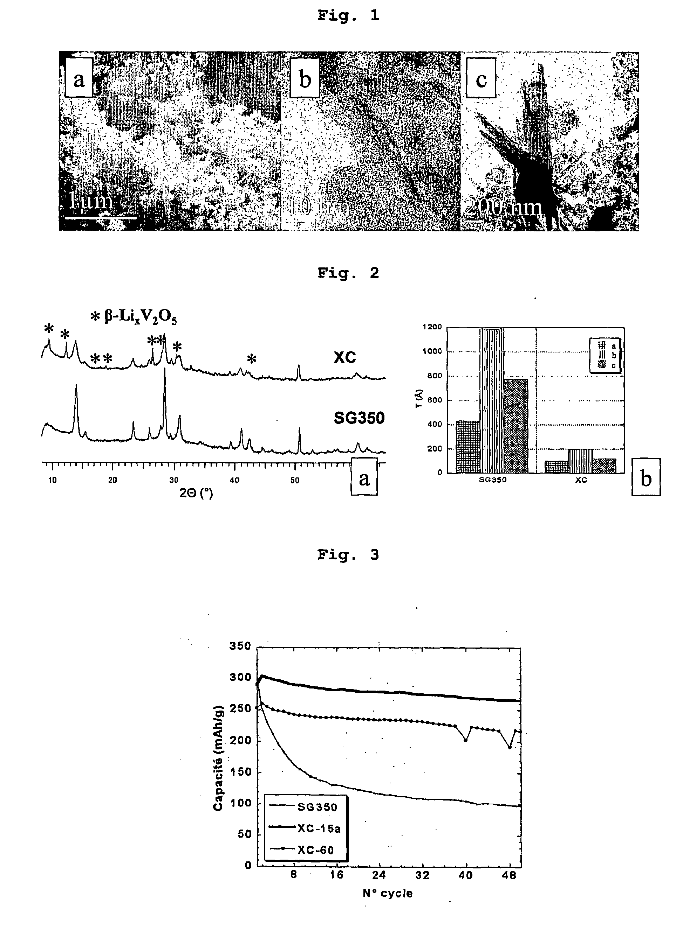

La détermination de la taille des cristallites a été faite par analyse du profil des raies de diffraction des rayons X. Les diagrammes de la partie b de la figure 2 montrent que le matériau XC-15a de l'invention présente des cristallites de 4 à 5 fois plus petits que l'échantillon SG350 de l'art antérieur, à savoir 110×180×150 Å pour le premier cité, et 432×118×773 Å pour le second.

### Exemple 2

### Préparation sans peroxyde

On a mis en oeuvre le procédé de préparation de l'exemple 1, mais en soumettant le xérogel obtenu après séchage à 90°C, à un traitement à 350°C pendant 1 heure au lieu de 15 min. Le composé obtenu est désigné par XC-60.

### Exemple 3

### Préparation avec peroxyde

On ajoute à 15 ml d'une solution aqueuse de peroxyde d'hydrogène à 30%, 1g de V₂O₅, 0,1689g de LiOH, H₂O et 0,1372 g de carbone. Un gel s'est formé en quelques minutes.

Le gel obtenu a été soumis à un séchage à 90°C pendant une nuit à l'air, puis à un traitement thermique de 15 min à 350°C sous argon.

La diffraction des rayons X met en évidence la coexistence des phases Li_{1+α}V₃O₈ et βLiₓV₂O₅. Les micrographies MEB et MET montrent que les grains de carbone enrobent les grains de Li_{1+α}V₃O₈ et de βLiₓV₂O₅ avec une bonne qualité de contact.

### Exemple 4

### Mesure des performances

Les performances électrochimiques du matériau XC-15a et XC-60 préparés respectivement selon l'exemple 1 et l'exemple 2 ont été testées en batterie swagelok de laboratoire du type : Li/ électrolyte liquide (EC+DMC+LiPF₆) / (XC), fonctionnant à température ambiante, dans des conditions de cyclage correspondant à 1 Li par groupement formulaire par 2,5 heures.

Des mesures analogues ont été effectuées sur un matériau SG350 auquel on a ajouté 5,18 g de carbone.

La figure 3 représente la variation de la capacité pour chacun des matériaux. Il apparaît que, après 50 cycles :
- l'échantillon XC-15a a une meilleure rétention de capacité en cyclage que l'échantillon SG350 (87% contre 34%) ;
- l'échantillon XC-60 a une capacité initiale plus basse que l'échantillon SG350 (260 mAh/g contre 300 mAh/g), mais une meilleure rétention de capacité de cyclage (83% contre 34%) .

Dans tous les cas, les échantillons selon l'invention ont une capacité beaucoup plus élevée après 50 cycles que l'échantillon SG350 selon l'art antérieur, à savoir 265 mAh/g pour XC-15a, 215 mAh/g pour XC-60 et 100 mAh/g pour SG350).

## Revendications

1. Procédé pour la préparation d'un matériau carboné consistant à préparer un gel précurseur carboné et à soumettre ledit gel à un traitement thermique, **caractérisé en ce que** :
- le gel précurseur est préparé par mise en contact de carbone, de V₂O₅-α et d'un précurseur de Li, en quantités telles que le rapport des concentrations [V₂O₅]/[Li] soit compris entre 1,15 et 1,5, et que le rapport en masse (carbone)/(carbone + V₂O₅ + précurseur de Li) soit de 10 à 15%;
- le traitement thermique est effectué en deux étapes : une première étape à une température entre 80°C et 150°C pendant une durée de 3 à 12 heures ; une seconde étape à une température entre 300°C et 350°C, pendant une durée comprise entre 10 min et 1 heure, sous atmosphère d'azote ou d'argon.

2. Procédé selon la revendication 1, **caractérisé en ce que** :
- le précurseur de Li est LiOH,H₂O ;
- V₂O₅-α et LiOH, H₂O sont introduits dans une suspension aqueuse de carbone sous atmosphère d'azote.

3. Procédé selon la revendication 2, **caractérisé en ce que** les concentrations en précurseurs sont entre 0,75 mol/l et 3 mol/l pour V₂O₅-α et entre 0,55 mol/l et 2,2 mol/l pour LiOH,H₂O.

4. Procédé selon la revendication 2, **caractérisé en ce que** le traitement thermique est effectué sous atmosphère d'argon ou d'azote.

5. Procédé selon la revendication 1, **caractérisé en ce qu'**on ajoute au milieu réactionnel une solution aqueuse contenant de 10 à 50% en volume de peroxyde d'hydrogène.

6. Procédé selon la revendication 5, **caractérisé en ce que** les concentrations sont de 0,05 mol/l à 2 mol/l pour V₂O₅-α, et de 0,04 mol/l à 1,5 mol/l pour le précurseur de Li.

7. Procédé selon la revendication 5, **caractérisé en ce que** le précurseur de lithium est choisi parmi LiOH,H₂O, LiCl, LiNO₃, ou un sel de lithium d'un acide carboxylique.

8. Procédé selon la revendication 7, **caractérisé en ce que** le sel de lithium d'acide carboxylique est choisi parmi l'acétylacétonate de lithium, l'acétate de lithium, le stéarate de lithium, le formiate de lithium, l'oxalate de lithium, le citrate de lithium, le lactate de lithium, le tartrate de lithium, le pyruvate de lithium.

9. Procédé selon la revendication 5, **caractérisé en ce qu'**on prépare une suspension aqueuse de V₂O₅-α et de carbone, et que l'on y ajoute une solution aqueuse de peroxyde, le précurseur de lithium pouvant être introduit dans la suspension aqueuse de V₂O₅-α et de carbone avant l'addition de la solution de peroxyde, ou après l'addition de la solution de peroxyde.

10. Procédé selon la revendication 5, **caractérisé en ce que** les quantités respectives de précurseur de Li et de V₂O₅-α dans le milieu réactionnel sont telles que 0,0,8 mol.l⁻¹ < [Li] < 0,7 mol.l⁻¹ et 0,1 mol.l⁻¹ < [V₂O₅] < 1 mol.l⁻¹_{.}

11. Matériau carboné nanostructuré constitué par des agglomérats de petites aiguilles de Li_{1+α}V₃O₈ et de βLiₓV₂O₅ (0,1≤ α ≤ 0,25 et 0,03 ≤ x ≤ 0,667 entourées par une couche discontinue de particules sphériques de carbone, dans lequel
- les aiguilles de Li_{1+α}V₃O₈ et les aiguilles de βLiₓV₂O₅ ont une longueur L de 40 à 100 nm, une largeur ℓ telle que 4<L/ℓ<100 et une épaisseur e telle que 4<L/e<100,
- les particules de carbone sphérique ont un diamètre compris d'environ 30 nm à 40 nm et forment un réseau tridimensionnel continu,
- la taille des cristallites constituant les aiguilles est comprise entre 50 et 300 Å selon **a**, 100 et 600 Å selon **b** et 75 et 450 Å selon **c**.

12. Electrode composite positive pour une batterie au lithium, fonctionnant de -20°C à 60°C en combinaison avec un électrolyte liquide, ou fonctionnant de 60°C à 120°C en combinaison avec un électrolyte solide polymère, **caractérisée en ce qu'**elle est constituée par un matériau composite qui contient un matériau carboné nanostructuré selon la revendication 11.

13. Electrode composite positive selon la revendication 12, **caractérisé en ce que** le matériau composite contient en outre :
• un liant conférant une tenue mécanique,
• éventuellement un composé conférant une conduction ionique

14. Electrode composite positive selon la revendication 13, **caractérisée en ce que** :
- la teneur en composé carboné nanostructuré est comprise entre 90 et 100 % en masse ;
- la teneur en liant est inférieure à 10 % en masse ;
- la teneur en composé conférant une conduction ionique est inférieure à 5 % en masse.

15. Electrode composite positive selon la revendication 14, **caractérisé en ce que** la teneur en composé conférant une conduction ionique est nulle.

16. Electrode selon la revendication 13, **caractérisé en ce que** le liant est constitué par un polymère non solvatant.

17. Electrode selon la revendication 13, **caractérisé en ce que** le liant est constitué par un polymère solvatant.

18. Electrode selon la revendication 13, **caractérisé en ce que** le liant est un mélange de polymère solvatant et de polymère non solvatant.

19. Electrode selon l'une des revendications 16 à 18, **caractérisé en ce que** le liant comprend en outre un composé polaire aprotique.

20. Electrode selon la revendication 13, **caractérisé en ce que** le composé conférant une conduction ionique est un sel de lithium, choisi parmi LiClO₄, LiPF₆, LiAsF₆, LiBF₄, LiR_{F}SO₃, LiCH₃SO₃, les bisperfluoroalkyl sulfonimidures de lithium, les bis- et les trisperfluorosulfonylméthides de lithium.

21. Batterie constituée par une électrode négative et une électrode positive séparée par un électrolyte constitué par un sel de lithium en solution dans un solvant, **caractérisé en ce que** l'électrode positive est une électrode selon l'une des revendications 12 à 20.

## Claims

1. A process for the preparation of a carbonaceous material which consists in preparing a carbonaceous precursor gel and in subjecting said gel to a heat treatment, **characterized in that**:
- the precursor gel is prepared by bringing carbon, α-V₂O₅ and a Li precursor into contact in amounts such that the ratio of the [V₂O₅]/[Li] concentrations is between 1.15 and 1.5 and that the (carbon)/(carbon + V₂O₅ + Li precursor) ratio by weight is from 10 to 15%;
- the heat treatment is carried out in two stages: a first stage at a temperature of between 80°C and 150°C for a time of 3 to 12 hours and a second stage at a temperature of between 300°C and 350°C for a time of between 10 min and 1 hour, under a nitrogen or argon atmosphere.

2. The process as claimed in claim 1, **characterized in that**:
- the Li precursor is LiOH·H₂O;
- α-V₂O₅ and LiOH·H₂O are introduced into an aqueous carbon suspension under a nitrogen atmosphere.

3. The process as claimed in claim 2, **characterized in that** the concentrations of precursors are between 0.75 mol/l and 3 mol/l for α-V₂O₅ and between 0.55 mol/l and 2.2 mol/l for LiOH·H₂O.

4. The process as claimed in claim 2, **characterized in that** the heat treatment is carried out under an argon or nitrogen atmosphere.

5. The process as claimed in claim 1, **characterized in that** an aqueous solution comprising from 10 to 50% by volume of hydrogen peroxide is added to the reaction medium.

6. The process as claimed in claim 5, **characterized in that** the concentrations are from 0.05 mol/l to 2 mol/l for α-V₂O₅ and from 0.04 mol/l to 1.5 mol/l for the Li precursor.

7. The process as claimed in claim 5, **characterized in that** the lithium precursor is chosen from LiOH·H₂O, LiCl, LiNO₃ or a lithium salt of a carboxylic acid.

8. The process as claimed in claim 7, **characterized in that** the lithium salt of carboxylic acid is chosen from lithium acetylacetonate, lithium acetate, lithium stearate, lithium formate, lithium oxalate, lithium citrate, lithium lactate, lithium tartrate or lithium pyruvate.

9. The process as claimed in claim 5, **characterized in that** an aqueous suspension of α-V₂O₅ and of carbon is prepared and that an aqueous peroxide solution is added thereto, it being possible for the lithium precursor to be introduced into the aqueous suspension of α-V₂O₅ and of carbon before the addition of the peroxide solution or after the addition of the peroxide solution.

10. The process as claimed in claim 5, **characterized in that** the respective amounts of Li precursor and of α-V₂O₅ in the reaction medium are such that 0.08 mol.l⁻¹ < [Li] < 0.7 mol.l⁻¹ and 0.1 mol.l⁻¹ < [V₂O₅] < 1 mol.l⁻¹.

11. A nanostructured carbonaceous material composed of agglomerates of small needles of Li_{1+α}V₃O₈ and of β-LiₓV₂O₅ (0.1 ≤ α ≤ 0.25 and 0.03 ≤ x ≤ 0.667) surrounded by a noncontinuous layer of spherical carbon particles, in which
- the Li_{1+α}V₃O₈ needles and the β-LiₓV₂O₅ needles have a length 1 from 40 to 100 nm, a width w such that 4 < 1/w < 100 and a thickness t such that 4 < 1/t < 100,
- the spherical carbon particles have a diameter of from approximately 30 nm to 40 nm and form a continuous three-dimensional network,
- the size of the crystallites constituting the needles is between 50 and 300 Å according to **a,** 100 and 600 Å according to **b** and 75 and 450 Å according to **c**.

12. A composite positive electrode for a lithium battery, operating from -20°C to 60°C in combination with a liquid electrolyte or operating from 60°C to 120°C in combination with a solid polymer electrolyte, **characterized in that** it is composed of a composite material which comprises a nanostructured carbonaceous material as claimed in claim 11.

13. The composite positive electrode as claimed in claim 12, **characterized in that** the composite material additionally comprises:
• a binder conferring mechanical strength,
• optionally a compound conferring ionic conduction.

14. The composite positive electrode as claimed in claim 13, **characterized in that**:
- the content of nanostructured carbonaceous compound is between 90 and 100% by weight;
- the content of binder is less than 10% by weight;
- the content of compound conferring ionic conduction is less than 5% by weight.

15. The composite positive electrode as claimed in claim 14, **characterized in that** there is no content of compound conferring ionic conduction.

16. The electrode as claimed in claim 13, **characterized in that** the binder is composed of a nonsolvating polymer.

17. The electrode as claimed in claim 13, **characterized in that** the binder is composed of a solvating polymer.

18. The electrode as claimed in claim 13, **characterized in that** the binder is a mixture of solvating polymer and of nonsolvating polymer.

19. The electrode as claimed in one of claims 16 to 18, **characterized in that** the binder additionally comprises a polar aprotic compound.

20. The electrode as claimed in claim 13, **characterized in that** the compound conferring ionic conduction is a lithium salt chosen from LiClO₄, LiPF₆, LiAsF₆, LiBF₄, LiR_{F}SO₃, LiCH₃SO₃, lithium bisperfluoroalkylsulfonimides and lithium bis- and trisperfluorosulfonylmethides.

21. A battery composed of a negative electrode and a positive electrode separated by an electrolyte composed of a lithium salt in solution in a solvent, **characterized in that** the positive electrode is an electrode as claimed in one of claims 12 to 20.

## Patentansprüche

1. Verfahren zur Herstellung eines kohlenstoffhältigen Materials, das darin besteht, ein kohlenstoffhältiges Vorläufergel herzustellen und das Gel einer Wärmebehandlung zu unterziehen, **dadurch gekennzeichnet, dass**:
- das Vorläufergel durch Kontaktieren von Kohlenstoff, α-V₂O₅ und einem Li-Vorläufer in einer solchen Menge, dass das Konzentrationsverhältnis [V₂O₅]/[Li] zwischen 1,15 und 1,5 liegt und das Gewichtsverhältnis [Kohlenstoff]/[Kohlenstoff+V₂O₅+ Li-Vorläufer] 10 bis 15 % beträgt, hergestellt wird;
- die Wärmebehandlung in zwei Schritten erfolgt: einem ersten Schritt bei einer Temperatur zwischen 80 °C und 150 °C für eine Dauer von 3 bis 12 h; einem zweiten Schritt bei einer Temperatur zwischen 300 °C und 350 °C für eine Dauer zwischen 10 min und 1 h unter Stickstoff- oder Argonatmosphäre.

2. Verfahren nach Anspruch 1, **dadurch gekennzeichnet, dass**:
- der Li-Vorläufer LiOH·H₂O ist;
- α-V₂O₅ und LiOH·H₂O unter Stickstoffatmosphäre in eine wässrige Kohlenstoffsuspension eingeführt werden.

3. Verfahren nach Anspruch 2, **dadurch gekennzeichnet, dass** die Konzentration der Vorläufer für α-V₂O₅ zwischen 0,75 mol/l und 3 mol/l und für LiOH·H₂O zwischen 0,55 mol/l und 2,2 mol/l beträgt.

4. Verfahren nach Anspruch 2, **dadurch gekennzeichnet, dass** die Wärmebehandlung unter Stickstoff- oder Argonatmosphäre erfolgt.

5. Verfahren nach Anspruch 1, **dadurch gekennzeichnet, dass** zum Reaktionsmedium eine wässrige Lösung zugesetzt wird, die 10 bis 50 Vol.-% Wasserstoffperoxid enthält.

6. Verfahren nach Anspruch 5, **dadurch gekennzeichnet, dass** die Konzentration für α-V₂O₂ 0,05 mol/l bis 2 mol/l und für den Li-Vorläufer 0,04 mol/l bis 1,5 mol/l beträgt.

7. Verfahren nach Anspruch 5, **dadurch gekennzeichnet, dass** der Lithiumvorläufer aus LiOH·H₂O, LiCl, LiNO₃ und einem Lithiumsalz einer Carbonsäure ausgewählt wird.

8. Verfahren nach Anspruch 7, **dadurch gekennzeichnet, dass** das Lithiumsalz der Carbonsäure aus Lithiumacetylacetonat, Lithiumacetat, Lithiumstearat, Lithiumformiat, Lithiumoxalat, Lithiumcitrat, Lithiumlactat, Lithiumtartrat und Lithiumpyruvat ausgewählt wird.

9. Verfahren nach Anspruch 5, **dadurch gekennzeichnet, dass** eine wässrige Suspension von α-V₂O₅ und Kohlenstoff hergestellt wird und eine wässrige Peroxidlösung zugesetzt wird, wobei der Lithiumvorläufer vor der Zugabe der Peroxidlösung oder nach der Zugabe der Peroxidlösung in die wässrige Lösung von α-V₂O₅ und Kohlenstoff eingeführt werden kann.

10. Verfahren nach Anspruch 5, **dadurch gekennzeichnet, dass** die jeweiligen Mengen von Li-Vorläufer und α-V₂O₅ im Reaktionsmedium solcherart sind, dass gilt: 0,08 mol/l < [Li] < 0,7 mol/l und 0,1 mol/l < [V₂O₅] < 1 mol/l.

11. Kohlenstoffhältiges Nanostrukturmaterial, das aus Agglomeraten kleiner Nadeln aus Li_{1+α}V₃O₈ und βLiₓV₂O₅ (0,1 ≤ α 0,25 und 0,03 ≤ x ≤ 0,667) besteht, die von einer diskontinuierlichen Schicht kugelförmiger Kohlenstoffteilchen umgeben sind, worin
- die Li_{1+α}V₃O₈-Nadeln und die βLiₓV₂O₅-Nadeln eine Länge L von 40 bis 100 nm, eine solche Breite ℓ, dass gilt: 4 < L/ℓ < 100, und eine solche Dicke e aufweisen, dass gilt: 4 < Ue < 100,
- die kugelförmigen Kohlenstoffteilchen einen Durchmesser von etwa 30 bis 40 nm aufweisen und ein kontinuierliches dreidimensionales Netzwerk bilden,
- die Form der die Nadeln bildenden Kristallite gemäß a zwischen 50 und 300 Å, gemäß b zwischen 100 und 600 Å und gemäß c zwischen 75 und 450 Å liegen.

12. Positive Verbundelektrode für eine Lithiumbatterie, die bei -20 °C bis 60 °C in Kombination mit einem flüssigen Elektrolyten oder bei 60 °C bis 120 °C in Kombination mit einem polymeren Festelektrolyten funktioniert, **dadurch gekennzeichnet, dass** sie aus einem Verbundmaterial besteht, das ein kohlenstoffhältiges Nanostrukturmaterial nach Anspruch 11 enthält.

13. Positive Verbundelektrode nach Anspruch 12, **dadurch gekennzeichnet, dass** das Verbundmaterial weiters Folgendes enthält:
• ein Bindemittel, das mechanische Festigkeit verleiht,
• gegebenenfalls eine Verbindung, die lonenleitfähigkeit verleiht.

14. Positive Verbundelektrode nach Anspruch 13, **dadurch gekennzeichnet, dass**:
- der Gehalt an kohlenstoffhältiger Nanostrukturverbindung zwischen 90 und 100 Gew.-% liegt;
- der Gehalt an Bindemittel weniger als 10 Gew.-% beträgt;
- der Gehalt an der lonenleitfähigkeit verleihenden Verbindung weniger als 5 Gew.-% beträgt.

15. Positive Verbundelektrode nach Anspruch 14, **dadurch gekennzeichnet, dass** der Gehalt der lonenleitfähigkeit verleihenden Verbindung Null beträgt.

16. Elektrode nach Anspruch 13, **dadurch gekennzeichnet, dass** das Bindemittel aus einem nicht solvatisierenden Polymer besteht.

17. Elektrode nach Anspruch 13, **dadurch gekennzeichnet, dass** das Bindemittel aus einem solvatisierenden Polymer besteht.

18. Elektrode nach Anspruch 13, **dadurch gekennzeichnet, dass** das Bindemittel ein Gemisch aus einem solvatisierenden Polymer und einem nicht solvatisierenden Polymers ist.

19. Elektrode nach einem der Ansprüche 16 bis 18, **dadurch gekennzeichnet, dass** das Bindemittel weiters eine aprotische polare Verbindung umfasst.

20. Elektrode nach Anspruch 13, **dadurch gekennzeichnet, dass** die Ionenleitfähigkeit verleihende Verbindung ein Lithiumsalz ist, das aus LiClO₄, LiPF₆, LiAsF₆, LiBF₄, LiR_{F}SO₃, LiCH₃SO₃, Lithiumbisperfluoralkylsulfonimiden, Lithiumbis- und -trisperfluorsulfonylmethiden ausgewählt ist.

21. Batterie aus einer negativen Elektrode und einer positiven Elektrode, die durch einen Elektrolyten voneinander getrennt sind, der aus einem in einem Lösungsmittel gelösten Lithiumsalz besteht, **dadurch gekennzeichnet, dass** die positive Elektrode eine Elektrode nach einem der Ansprüche 12 bis 20 ist.
